# EUROPEAN PATENT APPLICATION

(11) **EP 4 672 622 A1**
(43) Date of publication of application: **31.12.2025**
(21) Application number: 23933855.1
(22) Date of filing: 01.12.2023
(51) Int. Cl.: H04B 1/40

(54) **ANTENNA SWITCH MODULE, RADIOFREQUENCY FRONT-END AND COMMUNICATION APPARATUS**

(30) Priority: 21.04.2023 CN 202310459358
(71) Applicant: Honor Device Co., Ltd., Shenzhen, Guangdong 518040 (CN)
(72) Inventor: HUANG, Qinghua, Shenzhen, Guangdong 518040 (CN); LI, Zheng, Shenzhen, Guangdong 518040 (CN); SUN, Jiangtao, Shenzhen, Guangdong 518040 (CN); FENG, Baoxin, Shenzhen, Guangdong 518040 (CN)
(74) Representative: Gill Jennings & Every LLP
(86) International application number: PCT/CN2023/135963
(87) International publication number: WO 2024/216989

(57) **Abstract**

This application discloses an antenna switch module, a radio frequency front end, and a communication apparatus, and relates to the field of wireless communication, to independently decouple control logic of two groups of ports of the ASM, so that a conflict generated in connection between the two sides of ports of the ASM is avoided, and an insertion loss is not increased. The antenna switch module includes a first group of ports, a second group of ports, a control circuit, a switch circuit, and a register. The first group of ports is coupled to the second group of ports through the switch circuit. The register stores a first parameter and a second parameter of a first virtual common node, where the first parameter indicates which port in the first group of ports the first virtual common node is conducted to, and the second parameter indicates which port in the second group of ports the first virtual common node is conducted to. The control circuit controls the switch circuit to conduct the port in the first group of ports to the port in the second group of ports based on a result of performing AND after the first parameter and the second parameter of the first virtual common node are decoded.

## Description

This application claims priority to Chinese Patent Application No. 202310459358.X, filed with the China National Intellectual Property Administration on April 21, 2023 and entitled "ANTENNA SWITCH MODULE, RADIO FREQUENCY FRONT END, AND COMMUNICATION APPARATUS", which is incorporated herein by reference in its entirety.

### TECHNICAL FIELD

This application relates to the field of wireless communication, and in particular, to an antenna switch module, a radio frequency front end, and a communication apparatus.

### BACKGROUND

A plurality of channels (for example, a transmit channel and a receive channel, or two receive channels) in a communication apparatus are coupled to a plurality of antennas through an antenna switch module (antenna switch module, ASM). To be specific, a first group of ports of the ASM is configured to couple to the plurality of channels, and a second group of ports is configured to couple to the plurality of antennas. Switches connected in series on a transmission path of a radio frequency signal cause a relatively large insertion loss, affecting transmit efficiency and receive sensitivity of the radio frequency signal. Therefore, the fewer switches connected in series on the transmission path, the better. Therefore, inside the ASM, a single port in the first group of ports and a single port in the second group of ports are usually coupled through a switch; and when the switch is on, one channel may be conducted to one antenna, so that one channel occupies one antenna. When a plurality of channels occupy a plurality of antennas, switching between different channels and switching between different antennas are involved. For example, a same antenna is separately conducted to different channels, or a same channel is separately conducted to different antennas, both of which are involved in controlling on and off of a plurality of switches. Therefore, control logic of the switches is very complex, and a control logic conflict easily exists during use. For example, a plurality of channels may be simultaneously conducted to one antenna, or a plurality of antennas may be simultaneously conducted to one channel. If more switches are connected in series to ports of the ASM to further constrain control logic for conduction between the plurality of channels and the plurality of antennas, a control logic conflict is avoided, but the insertion loss of the transmission path is increased.

### SUMMARY

Embodiments of this application provide an antenna switch module, a radio frequency front end, and a communication apparatus, to independently decouple control logic of two groups of ports of the ASM, so that a conflict generated in conduction between the two groups of ports of the ASM is avoided, and an insertion loss is not increased.

To achieve the foregoing objective, the following technical solutions are used in embodiments of this application.

According to a first aspect, an antenna switch module is provided, including a first group of ports, a second group of ports, a control circuit, a switch circuit, and a register. The first group of ports is coupled to the second group of ports through the switch circuit. The first group of ports is configured to couple to a plurality of channels, and the second group of ports is configured to couple to a plurality of antennas. The register is configured to store a first parameter and a second parameter of a first virtual common node, where the first parameter of the first virtual common node indicates which port in the first group of ports the first virtual common node is conducted to, and the second parameter of the first virtual common node indicates which port in the second group of ports the first virtual common node is conducted to. The control circuit is configured to control the switch circuit to conduct the port in the first group of ports to the port in the second group of ports based on a result of performing AND after the first parameter and the second parameter of the first virtual common node are decoded.

According to the antenna switch module, the radio frequency front end, and the communication apparatus provided in embodiments of this application, a virtual common node is established in the ASM, where the virtual common node is an intermediate node for conduction between the first group of ports and the second group of ports. A first parameter and a second parameter of the virtual common node are configured in the register in the ASM, where the first parameter indicates which port in the first group of ports the virtual common node is conducted to, and the first parameter is equivalent to controlling a first single-pole multi-throw switch between the first group of ports and the virtual common node; and the second parameter indicates which port in the second group of ports the virtual common node is conducted to, and the second parameter is equivalent to controlling a second single-pole multi-throw switch between the second group of ports and the virtual common node. The control circuit controls the switch circuit to conduct the port in the first group of ports to the port in the second group of ports based on the first parameter and the second parameter, which is equivalent to conducting the port in the first group of ports to the port in the second group of ports through the virtual common node. Control logic of the two groups of ports of the ASM is independently decoupled, so that a conflict generated in conduction between the two groups of ports of the ASM is avoided. In addition, because no physical switch is added, and control logic of switches in the ASM is constrained, an insertion loss is not increased.

In a possible implementation, the plurality of channels include a transmit channel and a first receive channel, and the plurality of antennas include a first antenna and a second antenna. The first group of ports includes a transmit port and a first receive port, the transmit port is configured to couple to the transmit channel, and the first receive port is configured to couple to the first receive channel. The second group of ports includes a first antenna port, a second antenna port, and a sounding reference signal SRS output port, the first antenna port is configured to couple to the first antenna, the second antenna port is configured to couple to the second antenna, and the SRS output port is configured to couple to another radio frequency module. The switch circuit includes a first switch, a second switch, a fourth switch, and a seventh switch. The transmit port is coupled to the first antenna port through the first switch, the transmit port is coupled to the second antenna port through the fourth switch, and the transmit port is coupled to the SRS output port through the seventh switch. The first receive port is coupled to the first antenna port through the second switch. In this implementation, connection manners between the switches in the switch circuit and the ports are disclosed.

In a possible implementation, the control circuit is specifically configured to control the switch circuit to conduct the port in the first group of ports to the port in the second group of ports based on a result of performing AND after the first parameter and the second parameter of the first virtual common node are decoded. The control circuit bases on the AND operation performed after the first parameter and the second parameter are decoded, which is equivalent to that the first single-pole multi-throw switch and the second single-pole multi-throw switch described above are connected in series through the virtual common node and the virtual common node is used as a unique common node of the two groups of ports obtained through virtualization. The result of the AND operation is for controlling the switch circuit to conduct the port in the first group of ports to the port in the second group of ports based on the first parameter and the second parameter, which is equivalent to conducting the port in the first group of ports to the port in the second group of ports through the virtual common node. The control logic of the two groups of ports of the ASM is independently decoupled, so that the conflict generated in conduction between the two groups of ports of the ASM is avoided.

In a possible implementation, the control circuit includes a first decoder, a second decoder, a first AND gate, a second AND gate, a third AND gate, and a fourth AND gate. An input terminal of the first decoder is configured to input the first parameter of the first virtual common node. An input terminal of the second decoder is configured to input the second parameter of the first virtual common node. A first output terminal of the first decoder and a first output terminal of the second decoder are respectively coupled to two input terminals of the first AND gate, and an output terminal of the first AND gate is configured to control on and off of the first switch. A second output terminal of the first decoder and the first output terminal of the second decoder are respectively coupled to two input terminals of the fourth AND gate, and an output terminal of the fourth AND gate is configured to control on and off of the second switch. The first output terminal of the first decoder and a second output terminal of the second decoder are respectively coupled to two input terminals of the second AND gate, and an output terminal of the second AND gate is configured to control on and off of the fourth switch. A third output terminal of the second decoder is coupled to two input terminals of the third AND gate, and an output terminal of the third AND gate is configured to control on and off of the seventh switch. An AND gate is configured to implement an AND operation on decoding results of the first parameter and the second parameter, and an operation result output by the AND gate is for controlling on and off of a switch. Different decoding results of the first parameter indicate different ports in the first group of ports, and different decoding results of the second parameter indicate different ports in the second group of ports.

In a possible implementation, the plurality of channels further include a second receive channel, the first group of ports further includes a second receive port, the second receive port is configured to couple to the second receive channel, the switch circuit further includes a fifth switch, and the second receive port is coupled to the second antenna port through the fifth switch. When the first antenna port is occupied, the second receive port may be conducted to the second antenna port through the fifth switch, to occupy the second antenna port.

In a possible implementation, the control circuit further includes a third decoder, an input terminal of the third decoder is configured to input a third parameter, and an output terminal of the third decoder is configured to control on and off of the fifth switch. The third parameter is for controlling a port in the first group of ports to be directly conducted to a port in the second group of ports without passing through the virtual common node.

In a possible implementation, the register is further configured to store a first parameter and a second parameter of a second virtual common node, where the first parameter of the second virtual common node indicates which port in the first group of ports the second virtual common node is conducted to, and the second parameter of the second virtual common node indicates which port in the second group of ports the second virtual common node is conducted to. The control circuit is configured to control the switch circuit to conduct the port in the first group of ports to the port in the second group of ports based on a result of performing AND after the first parameter and the second parameter of the first virtual common node are decoded or based on a result of performing AND after the first parameter and the second parameter of the second virtual common node are decoded. The second virtual common node and the first virtual common node are equivalent, and may be equivalently exchanged. The two antenna ports respectively coupled to the two virtual common nodes may each be used as a primary transmit and receive port, and are not restricted by layouts and cabling, so that the use is more flexible.

In a possible implementation, the plurality of channels include a transmit channel, a first receive channel, and a second receive channel, and the plurality of antennas include a first antenna and a second antenna. The first group of ports includes a transmit port, a first receive port, and a second receive port, the transmit port is configured to couple to the transmit channel, the first receive port is configured to couple to the first receive channel, and the second receive port is configured to couple to the second receive channel. The second group of ports includes a first antenna port, a second antenna port, and an SRS output port, the first antenna port is configured to couple to the first antenna, the second antenna port is configured to couple to the second antenna, and the SRS output port is configured to couple to another radio frequency module. The switch circuit includes a first switch, a second switch, a fourth switch, a fifth switch, and a seventh switch. The transmit port is coupled to the first antenna port through the first switch, the transmit port is coupled to the second antenna port through the fourth switch, and the transmit port is coupled to the SRS output port through the seventh switch. The first receive port is coupled to the first antenna port through the second switch. The second receive port is coupled to the second antenna port through the fifth switch. The antenna switch module supports one transmit channel and two receive channels, and the two receive channels are equivalent.

In a possible implementation, the control circuit includes a first decoder, a second decoder, a first AND gate, a second AND gate, a third AND gate, a fourth AND gate, a third decoder, a fifth decoder, a fifth AND gate, a sixth AND gate, a seventh AND gate, an eighth AND gate, a first OR gate, a second OR gate, and a third OR gate. An input terminal of the first decoder is configured to input the first parameter of the first virtual common node. An input terminal of the second decoder is configured to input the second parameter of the first virtual common node. An input terminal of the fifth decoder is configured to input the first parameter of the second virtual common node. An input terminal of the third decoder is configured to input the second parameter of the second virtual common node. A first output terminal of the first decoder and a first output terminal of the second decoder are respectively coupled to two input terminals of the first AND gate, and an output terminal of the first AND gate is configured to control on and off of the first switch. A second output terminal of the first decoder and the first output terminal of the second decoder are respectively coupled to two input terminals of the fourth AND gate, and an output terminal of the fourth AND gate is configured to control on and off of the second switch. The first output terminal of the first decoder and a second output terminal of the second decoder are respectively coupled to two input terminals of the second AND gate, and an output terminal of the second AND gate is configured to control on and off of the fourth switch. A third output terminal of the second decoder is coupled to two input terminals of the third AND gate, and an output terminal of the third AND gate is configured to control on and off of the seventh switch. A first output terminal of the fifth decoder and a first output terminal of the third decoder are respectively coupled to two input terminals of the fifth AND gate, an output terminal of the fifth AND gate and the output terminal of the first AND gate are respectively coupled to two input terminals of the first OR gate, and an output terminal of the first OR gate is configured to control on and off of the first switch. A second output terminal of the fifth decoder and the first output terminal of the third decoder are respectively coupled to two input terminals of the eighth AND gate, and an output terminal of the eighth AND gate is configured to control on and off of the fifth switch. The first output terminal of the fifth decoder and a second output terminal of the third decoder are respectively coupled to two input terminals of the sixth AND gate, an output terminal of the sixth AND gate and the output terminal of the second AND gate are respectively coupled to two input terminals of the second OR gate, and an output terminal of the second OR gate is configured to control on and off of the fourth switch. A third output terminal of the third decoder is coupled to two input terminals of the seventh AND gate, an output terminal of the seventh AND gate and the output terminal of the third AND gate are respectively coupled to two input terminals of the third OR gate, and an output terminal of the third OR gate is configured to control on and off of the seventh switch. The first antenna port and the second antenna port are equivalent, and may be respectively used as a primary transmit and receive port. When the first antenna port is used as the primary transmit and receive port, the first antenna port is coupled to a port in the first group of ports through the first virtual common node. When the second antenna port is used as the primary transmit and receive port, the second antenna port is coupled to a port in the first group of ports through the second virtual common node.

In a possible implementation, the first group of ports further includes an SRS input port, the SRS input port is configured to couple to another radio frequency module, and the switch circuit further includes a third switch and a sixth switch. The SRS input port is coupled to the first antenna port through the third switch, and the SRS input port is coupled to the second antenna port through the sixth switch. An SRS signal is input from another radio frequency module of a communication apparatus through the SRS input port, and is transmitted through the first antenna port or the second antenna port.

In a possible implementation, the control circuit further includes a fourth decoder, an input terminal of the fourth decoder is configured to input a fourth parameter, a first output terminal of the fourth decoder is configured to control on and off of the third switch, and a second output terminal of the fourth decoder is configured to control on and off of the sixth switch. The fourth parameter is for controlling a port in the first group of ports to be directly conducted to a port in the second group of ports without passing through the virtual common node.

In a possible implementation, a first parameter and a second parameter of a same virtual common node are stored in one or two registers. When located in one register, costs of hardware can be reduced, and an area of a circuit board can be reduced.

According to a second aspect, a radio frequency front end is provided, including a power amplifier, a first linear amplifier, a second linear amplifier, a first filter, a second filter, a third filter, and the antenna switch module according to the first aspect and any one of implementations of the first aspect. The power amplifier is coupled to the transmit port of the antenna switch module through the first filter, the first linear amplifier is coupled to the first receive port of the antenna switch module through the second filter, and the second linear amplifier is coupled to the second receive port of the antenna switch module through the third filter.

According to a third aspect, a communication apparatus is provided, including the radio frequency front end according to the second aspect, a first antenna, and a second antenna. The first antenna is coupled to the first antenna port of the antenna switch module in the radio frequency front end, and the second antenna is coupled to the second antenna port of the antenna switch module in the radio frequency front end.

For technical effects of the second aspect to the third aspect, refer to technical effects of the first aspect and any one of implementations of the first aspect. Details are not described herein again.

### BRIEF DESCRIPTION OF DRAWINGS

FIG. 1 is a schematic diagram of a structure of a communication apparatus according to an embodiment of this application;
FIG. 2 is a schematic diagram of a structure of a radio frequency front end according to an embodiment of this application;
FIG. 3 is a schematic diagram of a transmit channel and a receive channel in a radio frequency front end according to an embodiment of this application;
FIG. 4 is a schematic diagram of a structure of another radio frequency front end according to an embodiment of this application;
FIG. 5 is a schematic diagram of a transmit channel and a receive channel in another radio frequency front end according to an embodiment of this application;
FIG. 6 is a schematic diagram of a structure of a virtual ASM according to an embodiment of this application;
FIG. 7 is a schematic diagram of a structure of another virtual ASM according to an embodiment of this application;
FIG. 8 is a schematic diagram of a structure of an ASM according to an embodiment of this application;
FIG. 9 is a schematic diagram of a structure of a control circuit according to an embodiment of this application;
FIG. 10 is a schematic diagram of a structure of another control circuit according to an embodiment of this application;
FIG. 11 is a schematic diagram of an actual path according to an embodiment of this application;
FIG. 12 is a schematic diagram of another actual path according to an embodiment of this application;
FIG. 13 is a schematic diagram of an equivalent path of a scenario 1 according to an embodiment of this application;
FIG. 14 is a schematic diagram of an actual path of a scenario 1 according to an embodiment of this application;
FIG. 15 is a schematic diagram of an equivalent path of a scenario 2 according to an embodiment of this application;
FIG. 16 is a schematic diagram of an actual path of a scenario 2 according to an embodiment of this application;
FIG. 17 is a schematic diagram of an equivalent path of a scenario 3 according to an embodiment of this application;
FIG. 18 is a schematic diagram of an actual path of a scenario 3 according to an embodiment of this application;
FIG. 19 is a schematic diagram of an equivalent path of a scenario 4 according to an embodiment of this application;
FIG. 20 is a schematic diagram of an actual path of a scenario 4 according to an embodiment of this application;
FIG. 21 is a schematic diagram of an equivalent path of a scenario 5 according to an embodiment of this application;
FIG. 22 is a schematic diagram of an actual path of a scenario 5 according to an embodiment of this application;
FIG. 23 is a schematic diagram of an equivalent path of a scenario 6 according to an embodiment of this application; and
FIG. 24 is a schematic diagram of an actual path of a scenario 6 according to an embodiment of this application.

### DESCRIPTION OF EMBODIMENTS

First, concepts in this application are described.

In embodiments of this application, the terms "first", "second", and the like are only used to distinguish features of the same type and cannot be understood as indicating relative importance, quantity, order, and the like.

In embodiments of this application, the term "example" or "for example" or the like is used to represent giving an example, an illustration, or a description. Any embodiment or design solution described as an "example" or "for example" in this application should not be explained as being more preferred or having more advantages than another embodiment or design solution. Exactly, use of the term such as "example" or "for example" is intended to present a related concept in a specific manner.

In embodiments of this application, the terms "coupled" and "connected" should be understood in a broad sense. For example, the terms "coupled" and "connected" may refer to a physical direct connection, or may refer to an indirect connection implemented by using an electronic device, for example, a connection implemented by using a resistor, an inductor, a capacitor, or another electronic device.

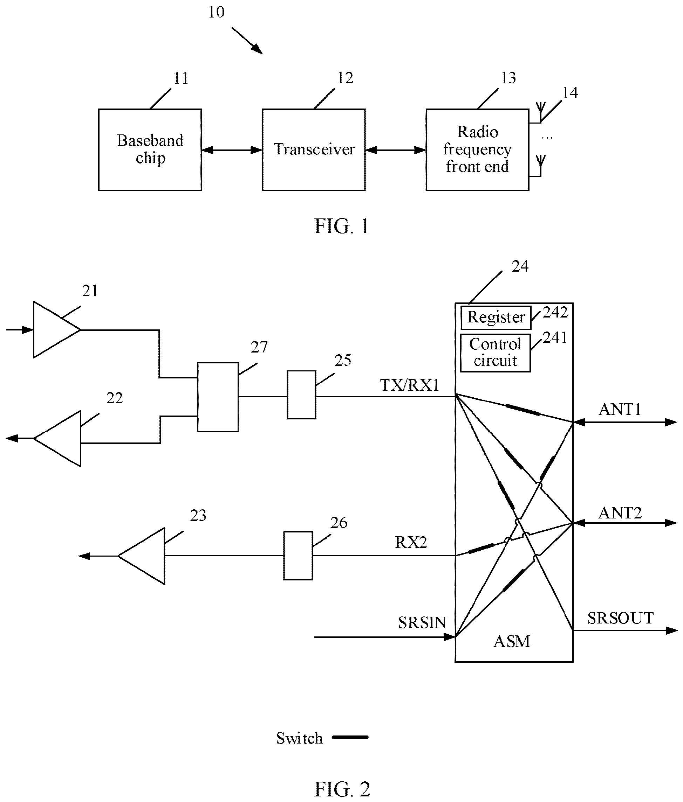

As shown in FIG. 1, an embodiment of this application provides a communication apparatus 10, including a baseband chip 11, a transceiver 12, a radio frequency front end 13, and a plurality of antennas 14.

The plurality of antennas 14 may implement transmit diversity and receive diversity. For example, during signal transmission, a same signal (for example, a sounding reference signal (sounding reference signal, SRS) signal described below) is transmitted through different antennas, so that transmit diversity can be implemented. During receiving of a radio frequency signal, the signal is received through different antennas, so that receive diversity can be implemented, where a radio frequency signal received by one antenna is a primary receive (primary receive, PRX) signal, and a radio frequency signal received by another antenna is a secondary receive (secondary receive, SRX) signal.

The baseband chip 11 is configured to perform digital domain processing of a signal, for example, modulate a transmitted signal and demodulate a received signal in a digital domain. The transceiver 12 is configured to perform digital-to-analog conversion on the transmitted signal, and migrate the transmitted signal upward from a baseband to an intermediate frequency and upward from the intermediate frequency to a radio frequency. The transceiver 12 is further configured to migrate the received signal downward from the radio frequency to the intermediate frequency and downward from the intermediate frequency to baseband, and then perform analog-to-digital conversion on the received signal. The radio frequency front end 13 is a series of components between the transceiver and the antennas; and mainly includes a power amplifier (power amplifier, PA) of a transmit channel, a low noise amplifier (low noise amplifier, LNA) of a receive channel, filters (filter) of the transmit channel and the receive channel, and an ASM shared by the transmit channel and the receive channel, and optionally, may further include an SP2T switch (or referred to as a duplexer) shared by the transmit channel and the receive channel. The PA is configured to amplify a transmit signal from the transceiver 12. The LNA is configured to amplify a receive signal received through the antenna 14. The SP2T switch is configured to send the receive signal to the LNA in a receive slot, and is further configured to feed the transmit signal from the PA to the antenna 14 in a transmit slot. The ASM is configured to switch a conduction status between the plurality of antennas 14 and a plurality of channels (for example, a transmit channel and a receive channel, or two receive channels). In the transmit slot, in the transmit channel, the ASM transmits sounding reference signal (SRS) signals in turn among the plurality of antennas. In the receive slot, in the receive channel, the ASM receives signals from the plurality of antennas. Therefore, the ASM may be considered as a multi-pole multi-throw switch.

In a possible implementation of the radio frequency front end, as shown in FIG. 2, the radio frequency front end 13 includes a PA 21, a first LNA 22, a second LNA 23, an ASM 24, a first filter 25, a second filter 26, and an SP2T switch 27.

The ASM 24 includes a first group of ports (a transmit/receive port TX/RX1, a second receive port RX2, and an SRS input port SRSIN) located on the left of the figure, a second group of ports (a first antenna port ANT1, a second antenna port ANT2, and an SRS output port SRSOUT) located on the right of the figure, a plurality of switches represented by bold solid lines, a control circuit 241, and a register 242.

The transmit/receive port TX/RX1 is separately coupled to a transmit channel (a channel in which the PA 21 is located) and a receive channel (a channel in which the first LNA 22 is located) through the first filter 25 and the SP2T switch 27 connected in series. The second receive port RX2 is configured to couple to the receive channel. The SRS input port SRSIN is configured to input an SRS signal from another radio frequency module (not shown in the figure) of the communication apparatus. The SRS output port SRSOUT is configured to output an SRS signal to another radio frequency module (not shown in the figure) of the communication apparatus. The first antenna port ANT1 is configured to couple to a first antenna (not shown in the figure). The second antenna port ANT2 is configured to couple to a second antenna (not shown in the figure).

The first group of ports and the second group of ports are coupled through the plurality of switches (represented by bold solid lines in the figure). To reduce an insertion loss, a single port in the first group of ports and a single port in the second group of ports are coupled through one switch. When the switch is on, one channel may be conducted to one antenna, so that one channel occupies one antenna.

For time division duplexing (time division duplexing, TDD), the PA 21 of the transmit channel and the first LNA 22 of the receive channel perform time division multiplexing on the first filter 25 through the SP2T switch 27. In a transmit slot, the SP2T switch 27 conducts the PA 21 to the first filter 25. In a receive slot, the SP2T switch 27 conducts the first LNA 22 to the first filter 25. The control circuit 241 in the ASM 24 may parse control parameters stored in the register 242, and control, by controlling on and off of the switches (represented by the bold solid lines in the figure), conduction and disconnection between the first group of ports and the second group of ports based on the parsed control parameters, to implement different conduction statuses between the plurality of channels and the plurality of antennas. For example, the transmit/receive port TX/RX1 is controlled to be separately conducted to or disconnected from the first antenna port ANT1, the second antenna port ANT2, and the SRS output port SRSOUT; the second receive port RX2 is controlled to be conducted to or disconnected from the second antenna port ANT2; and the SRS input port SRSIN is controlled to be separately conducted to or disconnected from the first antenna port ANT1 and the second antenna port ANT2. For example, Table 1 shows meanings of the control parameters stored in the register 242 in the ASM 24.

**Table 1**

| Register name | Bit | Default value | Meanings | |
|---|---|---|---|---|
| Register A | [7:6] | 00 | 00 | Disconnect the first antenna port ANT1 |
| | | | 01 | Conduct the first antenna port ANT1 to the transmit/receive port TX/RX1 |
| | | | 10 | Conduct the first antenna port ANT1 to the SRS input port SRSIN |
| | | | 11 | Reserved bit |
| | [5:4] | 00 | 00 | Disconnect the second antenna port ANT2 |
| | | | 01 | Conduct the second antenna port ANT2 to the transmit/receive port TX/RX1 |
| | | | 10 | Conduct the second antenna port ANT2 to the second receive port RX2 |
| | | | 11 | Conduct the second antenna port ANT2 to the SRS input port SRSIN |
| | [3:2] | 00 | 00 | Disconnect the SRS output port SRSOUT |
| | | | 01 | Conduct the SRS output port SRSOUT to the transmit port TX |
| | [1:0] | 00 | | Reserved bit |

It can be seen from the above that, the foregoing control parameters define the functions of the bits from the perspective of the second group of ports, that is, a port in the second group of ports is used as a starting point, to determine conduction and disconnection between the port and the first group of ports. For example, the bit [7:6] is for controlling conduction and disconnection between the first antenna port ANT1 and the first group of ports, the bit [5:4] is for controlling conduction and disconnection between the second antenna port ANT2 and the first group of ports, and the bit [3:2] is for controlling conduction and disconnection between the SRS output port SRSOUT and the first group of ports.

It should be noted that, to make the accompanying drawings simple and clear, the register, the control circuit, and the switches represented by the bold solid lines in the ASM are omitted from the following accompanying drawings related to the ASM.

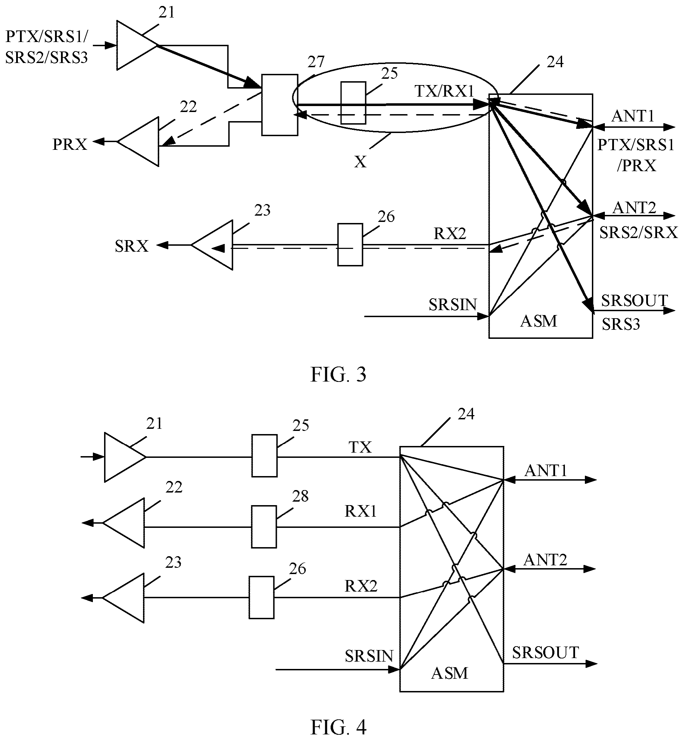

As shown in FIG. 3, solid-line arrows show the transmit channel (the channel in which the PA is located), and dashed-line arrows show the receive channel (the channel in which the LNA is located). When the transmit/receive port TX/RX1 of the ASM 24 is conducted to the first antenna port ANT1, a primary transmit signal PTX or a first SRS signal SRS1 may be transmitted, or a primary receive signal PRX may be received. When the transmit/receive port TX/RX1 is conducted to the second antenna port ANT2, a second SRS signal SRS2 may be transmitted. When the transmit/receive port TX/RX1 is conducted to the SRS output port SRSOUT, a third SRS signal SRS3 may be transmitted. When the second receive port RX2 is conducted to the second antenna port ANT2, a second receive signal SRX may be received. When the SRS input port SRSIN is separately conducted to the first antenna port ANT1 and the second antenna port ANT2, an SRS signal may be transmitted from another radio frequency module to the first antenna port ANT1 and the second antenna port ANT2.

When a plurality of channels occupy a plurality of antennas, switching between different channels and switching between different antennas are involved. For example, a same antenna is separately conducted to different channels, or a same channel is separately conducted to different antennas, both of which are involved in controlling on and off of a plurality of switches. Therefore, control logic of the switches is very complex, and a control logic conflict easily exists during use. Therefore, a system requires that a unique common node (for example, a common node X in FIG. 3) exists between the plurality of channels (for example, the transmit channel and the receive channel) and the plurality of antennas in the radio frequency front end, so that the plurality of channels can be conducted to the plurality of antennas through the common node. In this way, the switching between different channels and the switching between different antennas can be decoupled, this helps a developer to independently control the switching between different channels and the switching between different antennas, and control logic for conduction between the plurality of channels and the plurality of antennas is constrained in hardware. For example, this helps control one channel to be simultaneously conducted to only one antenna, to avoid a conflict generated in conduction between the two groups of ports of the ASM due to a wrong configuration of the developer. For example, a plurality of channels are simultaneously conducted to one antenna, or a plurality of antennas are simultaneously conducted to one channel.

The ASM 24 may control the transmit/receive port TX/RX1 to be separately conducted to the first antenna port ANT1, the second antenna port ANT2, or the SRS output port SRSOUT, to transmit SRS signals through different antennas, to implement transmit diversity of the SRS signals. The transmit/receive port TX/RX1 is equivalent to a common node (a first common node for short) of the first antenna port ANT1, the second antenna port ANT2, and the SRS output port SRSOUT. The SP2T switch 27 may control the transmit channel (the channel in which the PA 21 is located) or the receive channel (the channel in which the first LNA 22 is located) to be separately conducted to the transmit/receive port TX/RX1. A right port of the SP2T switch 27 is equivalent to a common node (a second common node for short) of the transmit channel and the receive channel. Because the first filter 25 is a passive device not controlled by a switch and there is no mutual exclusion in switch control logic, the left and the right of the first filter 25 are equivalent. Therefore, the first common node and the second common node essentially overlap. In other words, the common node X shown in the figure is the unique common node between the plurality of channels (for example, the transmit channel and the receive channel) and the plurality of antennas.

Conduction or disconnection between a plurality of ports (equivalent to the plurality of antennas) or the plurality of channels (the transmit channel or the receive channel) on two sides of the common node X and the common node X is respectively controlled, so that a conflict between control logic on the two sides of the common node X is not caused. For example, the SP2T switch 27 may be configured to control conduction or disconnection between the plurality of channels and the transmit/receive port TX/RX1.

However, in the foregoing radio frequency front end, the functions of the bits are defined from the perspective of the second group of ports, and in a multiple-subscriber identity module (subscriber identity module, SIM) (multi-sim) scenario, a conflict may be still generated in conduction between the two groups of ports of the ASM. For example, for dual SIM dual active (dual SIM dual active, DSDA), this requires that each port of the ASM 24 is independently controlled and a fixed antenna port is configured for each SIM card. As shown in FIG. 3, it is assumed that a SIM card 1 and a SIM card 2 perform time division duplexing on a same transmit channel but have different receive channels, the first antenna port ANT1 is configured for both a receive channel and a transmit channel of the SIM card 1, and the second antenna port ANT2 is configured for both a receive channel and a transmit channel of the SIM card 2. In the receive slot, the receive channel of the SIM card 1 occupies the transmit/receive port TX/RX1 and the first antenna port ANT1, to be specific, the bit [7:6] of the register A is set to 01; and the receive channel of the SIM card 2 occupies the second receive port RX2 and the second antenna port ANT2, to be specific, the bit [5:4] of the register A is set to 10. When the receive slot is switched to the transmit slot, the SIM card 2 needs to occupy the transmit/receive port TX/RX1 and the second antenna port ANT2, to be specific, the bit [5:4] of the register A is set to 01. However, in this case, the SIM card 1 still occupies the transmit/receive port TX/RX1 and the first antenna port ANT1, to be specific, the transmit/receive port TX/RX1 is simultaneously conducted to the first antenna port ANT1 and the second antenna port ANT2, causing a conflict generated in conduction between the two groups of ports of the ASM.

In addition, the SP2T switch 27 in the foregoing radio frequency front end causes a relatively large insertion loss to the transmit channel and the receive channel, affecting transmit efficiency of the transmit channel and receive sensitivity of the receive channel.

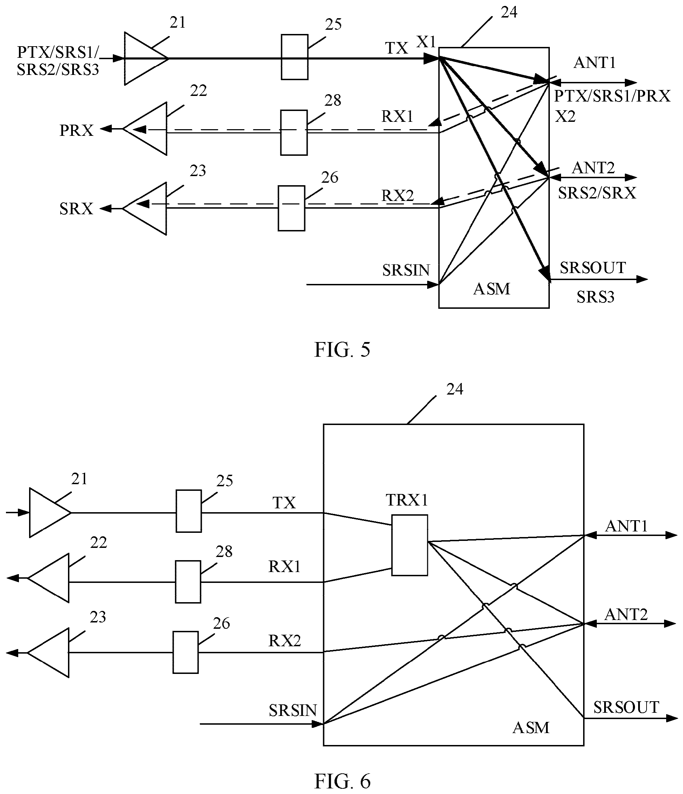

In another possible implementation of the radio frequency front end, as shown in FIG. 4, the radio frequency front end 13 is not provided with an SP2T switch 27 in FIG. 2, to reduce an insertion loss, and a third filter 28 is added; a transmit/receive port TX/RX1 of an ASM 24 is changed to a transmit port TX, and a first receive port RX1 is added; and a first LNA 22 is coupled to the first receive port RX1 of the ASM 24 through the third filter 28. As shown in FIG. 5, solid-line arrows show the transmit channel, and dashed-line arrows show the receive channel. When the transmit port TX is conducted to a first antenna port ANT1, a primary transmit signal PTX or a first SRS signal SRS1 may be transmitted. When the first receive port RX1 is conducted to the first antenna port ANT1, a primary receive signal PRX may be received. When the transmit port TX is conducted to a second antenna port ANT2, a second SRS signal SRS2 may be transmitted. When the transmit port TX is conducted to an SRS output port SRSOUT, a third SRS signal SRS3 may be transmitted. When a second receive port RX2 is conducted to the second antenna port ANT2, a secondary receive signal SRX may be received. When an SRS input port SRSIN is separately conducted to the first antenna port ANT1 or the second antenna port ANT2, an SRS signal may be transmitted to another radio frequency module.

The transmit port TX may be separately conducted to the first antenna port ANT1, the second antenna port ANT2, or the SRS output port SRSOUT, to output SRS signals through different antennas, to implement polling of the SRS signals. The transmit port TX is equivalent to a common node (a first common node X1 for short) of the SRS signals. Because the first antenna port ANT1 may be separately conducted to the transmit port TX or the first receive port RX1, the first antenna port ANT1 is equivalent to a common node (a second common node X2 for short) of the transmit channel and the receive channel. The first common node X1 and the second common node X2 do not overlap. In other words, there is no common node between the plurality of channels and the plurality of antennas. Therefore, when a plurality of channels occupy a plurality of antennas, a conflict may be generated in conduction between two groups of ports of the ASM. This is explained and described below.

For example, Table 2 shows meanings of control parameters stored in a register in the ASM 24.

**Table 2**

| Register name | Bit | Default value | Meanings | |
|---|---|---|---|---|
| Register A | [7:6] | 00 | 00 | Disconnect the first antenna port ANT1 |
| | | | 01 | Conduct the first antenna port ANT1 to the transmit port TX |
| | | | 10 | Conduct the first antenna port ANT1 to the first receive port RX1 |
| | | | 11 | Conduct the first antenna port ANT1 to the SRS input port SRSIN |
| | [5:4] | 00 | 00 | Disconnect the second antenna port ANT2 |
| | | | 01 | Conduct the second antenna port ANT2 to the transmit port TX |
| | | | 10 | Conduct the second antenna port ANT2 to the second receive port RX2 |
| | | | 11 | Conduct the first antenna port ANT1 to the SRS input port SRSIN |
| | [3:2] | 00 | 00 | Disconnect the SRS output port SRSOUT |
| | | | 01 | Conduct the SRS output port SRSOUT to the transmit port TX |
| | [1:0] | 00 | | Reserved bit |

It can be seen from the above that, similar to Table 1, the foregoing control parameters also define the functions of the bits from the perspective of a second group of ports. The first antenna port ANT1 is a primary transmit and receive port. When the first antenna port ANT1 outputs the first SRS signal SRS1 or the primary transmit signal PTX, the bit [7:6] needs to be set to 01 (the first antenna port ANT1 is conducted to the transmit port TX). When the second antenna port ANT2 outputs the second SRS signal SRS2, the bit [5:4] is set to 01 (the second antenna port ANT2 is conducted to the transmit port TX), and the bit [7:6] is set to 00 (the first antenna port ANT1 is disconnected). When a third antenna port ANT3 outputs the third SRS signal SRS3, the bit [3:2] is set to 01 (the SRS output port SRSOUT is conducted to the transmit port TX), and the bit [7:6] is set to 00 (the first antenna port ANT1 is disconnected). In other words, transmitting a radio frequency signal involves controlling the first antenna port ANT1. When the primary receive signal PRX is received through the first antenna port ANT1, the bit [7:6] needs to be set to 10 (the first antenna port ANT1 is conducted to the first receive port RX1). In other words, receiving a radio frequency signal also involves controlling the first antenna port ANT1. Therefore, when switching is performed between the plurality of channels, regardless of whether the plurality of antennas are switched, the first antenna port ANT1 needs to be adaptively configured. If the configuration is improper, a plurality of channels are simultaneously conducted to one antenna, or a plurality of antennas are simultaneously conducted to one channel, in other words, a control logic conflict is generated. In this way, switching between different channels and switching between different antennas are not decoupled, which does not satisfy a system requirement.

In other words, the radio frequency front end shown in FIG. 4 and FIG. 5 is not provided with the SP2T switch, which eliminates an insertion loss caused by the SP2T switch, and can improve transmit efficiency of the transmit channel and receive sensitivity of the receive channel. However, because the first common node and the second common node do not overlap, when a plurality of channels occupy a plurality of antennas, a conflict is generated in conduction between the two groups of ports of the ASM.

An embodiment of this application provides another ASM, to improve the ASM shown in FIG. 4 and FIG. 5, and the ASM is applied to the radio frequency front end shown in FIG. 4 and FIG. 5. A first group of ports of the ASM is configured to couple to a plurality of channels, a second group of ports of the ASM is configured to couple to a plurality of antennas, and the first group of ports is coupled to the second group of ports through a switch circuit. When a plurality of channels occupy a plurality of antennas, for a switch that is in the switch circuit and that may cause a control logic conflict generated in conduction between the two groups of ports, a virtual common node is established in the ASM, and a first parameter and a second parameter of the virtual common node are configured in a register in the ASM, where the first parameter indicates which port in the first group of ports (namely, left ports) the virtual common node is conducted to, and the second parameter indicates which port in the second group of ports (namely, right ports) the virtual common node is conducted to. A control circuit implements an AND operation performed after the first parameter and the second parameter are decoded, to control the switch to be turned on, to conduct the port in the first group of ports to the port in the second group of ports, which is equivalent to conducting the port in the first group of ports to the port in the second group of ports through the virtual common node. In other words, the virtual common node constrains conduction between a channel and an antenna, thereby avoiding a conflict generated in conduction between the two groups of ports of the ASM when the plurality of channels occupy the plurality of antennas.

Similarly, more virtual common nodes (for example, two virtual common nodes in total) may also be added, and two ports in the first group of ports are respectively conducted to two ports in the second group of ports through the two virtual common nodes.

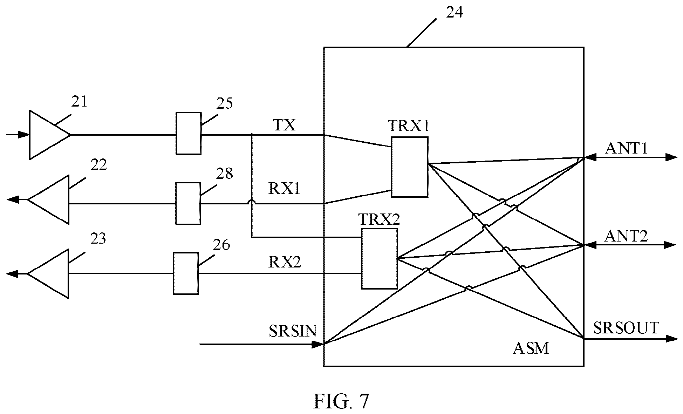

The ASM may be equivalent to that based on the ASM shown in FIG. 2 and FIG. 3, a single virtual SP2T switch shown in FIG. 6 is added (that is, a first virtual common node TRX1 is added), and the control circuit implements the AND operation performed after the first parameter and the second parameter are decoded, to implement series connection between virtual SP2T (the SP2T formed by the transmit port TX, the first receive port RX1, and the first virtual common node TRX1) and SP3T (the SP3T formed by the first antenna port ANT1, the second antenna port ANT2, the SRS output port SRSOUT, and the first virtual common node TRX1). Alternatively, two virtual SP2T switches shown in FIG. 7 are added (that is, a first virtual common node TRX1 and a second virtual common node TRX2 are added). In the ASM shown in FIG. 6, the first antenna port ANT1 is used as a primary transmit and receive port, and is coupled to a left port through the first virtual common node TRX1. In the ASM shown in FIG. 7, the first antenna port ANT1 and the second antenna port ANT2 are equivalent, and may be respectively used as a primary transmit and receive port. When the first antenna port ANT1 is used as the primary transmit and receive port, the first antenna port ANT1 is coupled to a port in the first group of ports through the first virtual common node TRX1. When the second antenna port ANT2 is used as the primary transmit and receive port, the second antenna port ANT2 is coupled to a port in the first group of ports through the second virtual common node TRX2. The second virtual common node TRX2 and the first virtual common node TRX1 are equivalent, and may be equivalently exchanged. The two antenna ports respectively coupled to the two virtual common nodes may each be used as the primary transmit and receive port, and are not restricted by layouts and cabling, so that the use is more flexible.

A real structure of the ASM is described below.

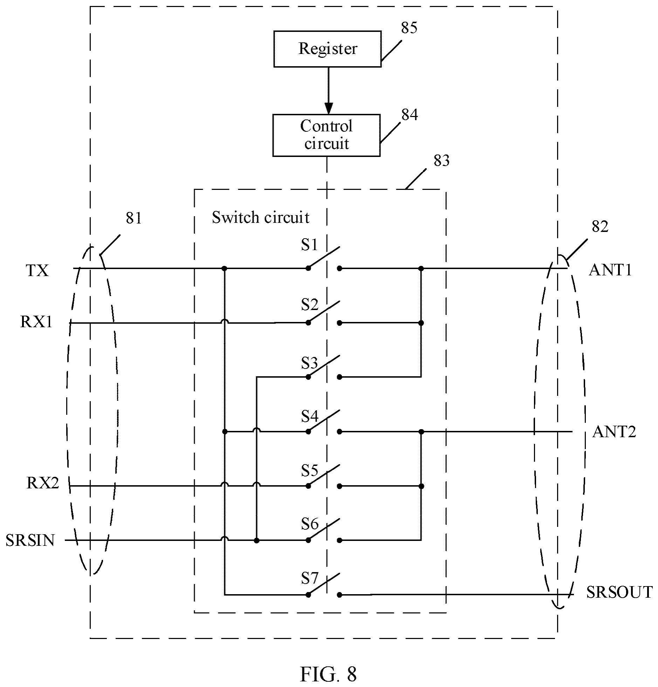

As shown in FIG. 8, the ASM includes a first group of ports 81 (namely, the left ports described above), a second group of ports 82 (namely, the right ports described above), a switch circuit 83, a control circuit 84, and a register 85. Both a quantity of ports in the first group of ports and a quantity of ports in the second group of ports are greater than 2. The first group of ports 81 is coupled to the second group of ports 82 through the switch circuit 83. Purposes of the first group of ports and the second group of ports are not limited in embodiments of this application. For example, the first group of ports 81 includes a transmit port TX, a first receive port RX1, a second receive port RX2, and an SRS input port SRSIN. The second group of ports 82 includes a first antenna port ANT1, a second antenna port ANT2, and an SRS output port SRSOUT. The transmit port TX is configured to couple to a transmit channel. The first receive port RX1 and the second receive port RX2 are respectively configured to couple to two receive channels. The first antenna port ANT1 is configured to couple to a first antenna (not shown in the figure). The second antenna port ANT2 is configured to couple to a second antenna (not shown in the figure). The SRS input port SRSIN is configured to input an SRS signal from another radio frequency module (not shown in the figure) of a communication apparatus. The SRS output port SRSOUT is configured to output an SRS signal to another radio frequency module (not shown in the figure) of the communication apparatus. It should be noted that, that the ASM forwards the SRS signal from the another radio frequency module and that the ASM is occupied by the transmit channel or the receive channel are in two different operating modes, which are mutually exclusive.

As shown in FIG. 8, the switch circuit 83 includes a first switch S1, a second switch S2, a third switch S3, a fourth switch S4, a fifth switch S5, a sixth switch S6, and a seventh switch S7.

The transmit port TX is coupled to the first antenna port ANT1 through the first switch S1, the transmit port TX is coupled to the second antenna port ANT2 through the fourth switch S4, and the transmit port TX is coupled to the SRS output port SRSOUT through the seventh switch S7. The first receive port RX1 is coupled to the first antenna port ANT1 through the second switch S2. The second receive port RX2 is coupled to the second antenna port ANT2 through the fifth switch S5. The SRS input port SRSIN is coupled to the first antenna port ANT1 through third switch S3, and the SRS input port SRSIN is coupled to the second antenna port ANT2 through sixth switch S6.

The register 85 is configured to store control parameters of the switch circuit 83. The control parameters include a first parameter and a second parameter of a virtual common node, where the first parameter indicates which port in the first group of ports 81 the virtual common node is conducted to, and the second parameter indicates which port in the second group of ports 82 the virtual common node is conducted to. In other words, different decoding results of the first parameter indicate different ports in the first group of ports, and different decoding results of the second parameter indicate different ports in the second group of ports. The register 85 may include two registers (a register A and a register B) shown in Table 3 and Table 5, or may include one register (the register A) shown in Table 4.

The first parameter and the second parameter of the virtual common node are suitable for controlling a switch that is in the switch circuit 83 and that may cause a control logic conflict generated in conduction between the two groups of ports. The switches may control a plurality of switches in the first group of ports to be respectively conducted to a plurality of switches in the second group of ports. For example, in the foregoing descriptions of FIG. 4 and FIG. 5, it is mentioned that the transmit port TX may be separately conducted to the first antenna port ANT1, the second antenna port ANT2, or the SRS output port SRSOUT, and the first antenna port ANT1 may be separately conducted to the transmit port TX or the first receive port RX1. In this case, a plurality of channels may occupy a plurality of antennas, and a control logic conflict is generated if a configuration is improper. Switches involved in the conduction relationships are the first switch S1, the second switch S2, the fourth switch S4, and the seventh switch S7 in FIG. 8. Therefore, the first parameter and the second parameter of the virtual common node may be configured for the switches, and on and off of the switches are controlled based on a result of performing AND after the first parameter and the second parameter of the virtual common node are decoded.

In addition to the first parameter and the second parameter of the virtual common node, the control parameters of the switch circuit 83 further include other parameters for controlling a port in the first group of ports 81 to be directly conducted to a port in the second group of ports 82 without passing through the virtual common node, namely, a third parameter and a fourth parameter described below.

The third parameter and the fourth parameter described below are suitable for controlling a switch that is in the switch circuit 83 and that does not cause a control logic conflict generated in conduction between the two groups of ports. For example, the ASM inputs the SRS signal from the another radio frequency module through the SRS input port SRSIN, and transmits the SRS signal through the first antenna port ANT1 or the second antenna port ANT2. In this case, only control of the third switch S3 and the sixth switch S6 in FIG. 8 is involved. Therefore, the first parameter and the second parameter of the virtual common node do not need to be configured for the switches.

For example, Table 3 to Table 5 show the control parameters stored in the register 85 in an ASM 24. Table 3 and Table 4 are applied to a scenario of a single virtual common node (for example, a first virtual common node); a first parameter and a second parameter of the first virtual common node in Table 3 are located in two registers; and the first parameter and the second parameter of the first virtual common node in Table 4 are located in one register, to reduce hardware costs and reduce a circuit board area. Table 5 is applied to a scenario of two virtual common nodes (for example, a first virtual common node and a second virtual common node). A bit [7:6] of the register A in Table 3 to Table 5 indicates a second parameter of a first virtual common node TRX1, and a bit [7:4] of the register B in Table 3 and Table 5 and a bit [1:0] of the register A in Table 4 indicate a first parameter of the first virtual common node TRX1. A bit [5:4] of the register A in Table 5 indicates a second parameter of a second virtual common node TRX2, and a bit [3:0] of the register B in Table 5 indicates a first parameter of the second virtual common node TRX2.

**Table 3**

| Register name | Bit | Default value | Meanings | |
|---|---|---|---|---|
| Register A | [7:6] | 00 | 00 | Disconnect the first virtual common node TRX1 |
| | | | 01 | Conduct the first virtual common node TRX1 to the first antenna port ANT1 |
| | | | 10 | Conduct the first virtual common node TRX1 to the second antenna port ANT2 |
| | | | 11 | Conduct the first virtual common node TRX1 to the SRS output port SRSOUT |
| | [5:4] | 00 | 00 | Disconnect the second receive port RX2 |
| | | | 01 | Conduct the second receive port RX2 to the second antenna port ANT2 |
| | | | Other | Reserved bit |
| | [3:2] | 00 | 00 | Disconnect the SRS input port SRSIN |
| | | | 01 | Conduct the SRS input port SRSIN to the first antenna port ANT1 |
| | | | 10 | Conduct the SRS input port SRSIN to the second antenna port ANT2 |
| | [1:0] | 00 | | Reserved bit |
| Register B | [7:4] | 0000 | 0000 | Disconnect the first virtual common node TRX1 |
| | | | 0001 | Conduct the first virtual common node TRX1 to the transmit port TX |
| | | | 0010 | Conduct the first virtual common node TRX1 to the first receive port RX1 |
| | | | Other | Reserved bit |
| | [3:0] | 0000 | 0000 | Reserved bit |

**Table 4**

| Register name | Bit | Default value | Meanings | |
|---|---|---|---|---|
| Register A | [7:6] | 00 | 00 | Disconnect the first virtual common node TRX1 |
| | | | 01 | Conduct the first virtual common node TRX1 to the first antenna port ANT1 |
| | | | 10 | Conduct the first virtual common node TRX1 to the second antenna port ANT2 |
| | | | 11 | Conduct the first virtual common node TRX1 to the SRS output port SRSOUT |
| | [5:4] | 00 | 00 | Disconnect the second receive port RX2 |
| | | | 01 | Conduct the second receive port RX2 to the second antenna port ANT2 |
| | | | Other | Reserved bit |
| | [3:2] | 00 | 00 | Disconnect the SRS input port SRSIN |
| | | | 01 | Conduct the SRS input port SRSIN to the first antenna port ANT1 |
| | [1:0] | 00 | 00 | Disconnect the first virtual common node TRX1 |
| | | | 01 | Conduct the first virtual common node TRX1 to the transmit port TX |
| | | | 10 | Conduct the first virtual common node TRX1 to the first receive port RX1 |
| | | | 11 | Reserved bit |

**Table 5**

| Register name | Bit | Default value | Meanings | |
|---|---|---|---|---|
| Register A | [7:6] | 00 | 00 | Disconnect the first virtual common node TRX1 |
| | | | 01 | Conduct the first virtual common node TRX1 to the first antenna port ANT1 |
| | | | 10 | Conduct the first virtual common node TRX1 to the second antenna port ANT2 |
| | | | 11 | Conduct the first virtual common node TRX1 to the SRS output port SRSOUT |
| | [5:4] | 00 | 00 | Disconnect the second virtual common node TRX2 |
| | | | 01 | Conduct the second virtual common node TRX2 to the first antenna port ANT1 |
| | | | 10 | Conduct the second virtual common node TRX2 to the second antenna port ANT2 |
| | | | 11 | Conduct the second virtual common node TRX2 to the SRS output port SRSOUT |
| | [3:2] | 00 | 00 | Disconnect the SRS input port SRSIN |
| | | | 01 | Conduct the SRS input port SRSIN to the first antenna port ANT1 |
| | | | 10 | Conduct the SRS input port SRSIN to the second antenna port ANT2 |
| | [1:0] | 00 | | Reserved bit |
| Register B | [7:4] | 0000 | 0000 | Disconnect the first virtual common node TRX1 |
| | | | 0001 | Conduct the first virtual common node TRX1 to the transmit port TX |
| | | | 0010 | Conduct the first virtual common node TRX1 to the first receive port RX1 |
| | | | Other | Reserved bit |
| | [3:0] | 0000 | 0000 | Disconnect the second virtual common node TRX2 |
| | | | 0001 | Conduct the second virtual common node TRX2 to the transmit port TX |
| | | | 0010 | Conduct the second virtual common node TRX2 to the second receive port RX2 |
| | | | Other | Reserved bit |

The control circuit 84 is configured to control the switch circuit 83 to conduct the port in the first group of ports 81 to the port in the second group of ports 82 based on a result obtained after the control parameters stored in the register are decoded. For example, the control circuit 84 controls the switch circuit 83 to conduct the port in the first group of ports 81 to the port in the second group of ports 82 based on a result of performing AND after the first parameter and the second parameter of the first virtual common node are decoded or based on a result of performing AND after the first parameter and the second parameter of the second virtual common node are decoded. Different decoding results of the first parameter indicate different ports in the first group of ports, and different decoding results of the second parameter indicate different ports in the second group of ports.

A DSDA scenario is still used as an example. As shown in FIG. 6 and Table 3, it is assumed that a SIM card 1 and a SIM card 2 perform time division duplexing on a same transmit channel but the SIM card 1 and the SIM card 2 have different receive channels, the first antenna port ANT1 is configured for both a receive channel and a transmit channel of the SIM card 1, and the second antenna port ANT2 is configured for both a receive channel and a transmit channel of the SIM card 2. In a receive slot, a receive channel 1 of the SIM card 1 occupies the first receive port RX1 and the first antenna port ANT1, to be specific, the bit [7:6] of the register A is set to 01, and the bit [7:4] of the register B is set to 0010; and a receive channel 2 of the SIM card 2 occupies the second receive port RX2 and the second antenna port ANT2, to be specific, the bit [5:4] of the register A is set to 01. When the receive slot is switched to a transmit slot, the SIM card 2 needs to preempt the transmit port TX and the second antenna port ANT2, to be specific, the bit [7:6] of the register A is set from 01 to 10, and the bit [7:4] of the register B is set from 0010 to 0001. Values 01 and 10 of the bit [7:6] of the register A are mutually exclusive, and values 0010 and 0001 of the bit [7:4] of the register B are also mutually exclusive. Therefore, there is no case in which the first common node is simultaneously conducted to the transmit port TX and the first receive port RX1, and there is no case in which the first common node is simultaneously conducted to the first antenna port ANT1 and the second antenna port. This is equivalent to that one port in the first group of ports is conducted to only one port in the second group of ports, and no conflict is generated in conduction between the two groups of ports of the ASM. Therefore, the present invention is applicable to the DSDA scenario.

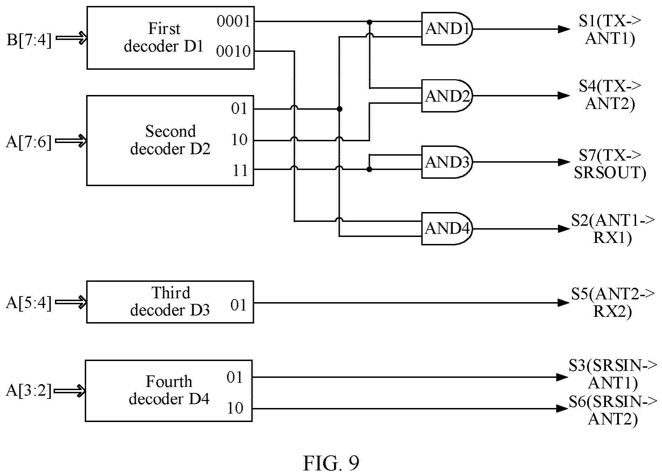

The control parameters shown in Table 3 are used as an example. As shown in FIG. 9, the control circuit 84 includes a first decoder D1, a second decoder D2, a third decoder D3, a fourth decoder D4, a first AND gate AND1, a second AND gate AND2, a third AND gate AND3, and a fourth AND gate AND4.

An input terminal of the first decoder D1 is configured to input B[7:4] (the bit [7:4] of the register B, namely, the first parameter of the first virtual common node TRX1). An input terminal of the second decoder D2 is configured to input A[7:6] (the bit [7:6] of the register A, namely, the second parameter of the first virtual common node TRX1). An input terminal of the third decoder D3 is configured to input A[5:4] (the bit [5:4] of the register A, namely, the third parameter). An input terminal of the fourth decoder D4 is configured to input A[3:2] (the bit [3:2] of the register A, namely, the fourth parameter).

A first output terminal of the first decoder D1 (where 0001 is obtained through decoding B[7:4]) and a first output terminal of the second decoder D2 (where 01 is obtained through decoding A[7:6]) are respectively coupled to two input terminals of the first AND gate AND1, and an output terminal of the first AND gate AND1 is configured to control on and off of the first switch S1 shown in FIG. 8. When the first decoder D1 decodes B[7:4] to obtain 0001 and the second decoder decodes A[7:6] to obtain 01, the first switch S1 is turned on, to conduct the transmit port TX to the first antenna port ANT1. Other decoding results of A[7:6] and B[7:4] cause the first switch S1 to be turned off.

A second output terminal of the first decoder D1 (where 0010 is obtained through decoding B[7:4]) and the first output terminal of the second decoder D2 (where 01 is obtained through decoding A[7:6]) are respectively coupled to two input terminals of the fourth AND gate AND4, and an output terminal of the fourth AND gate AND4 is configured to control on and off of the second switch S2 shown in FIG. 8. When the first decoder D1 decodes B[7:4] to obtain 0010 and the second decoder decodes A[7:6] to obtain 01, the second switch S2 is turned on, to conduct the first antenna port ANT1 to the first receive port RX1. Other decoding results of A[7:6] and B[7:4] cause the second switch S2 to be turned off.

The first output terminal of the first decoder D1 (where 0001 is obtained through decoding B[7:4]) and a second output terminal of the second decoder D2 (where 10 is obtained through decoding A[7:6]) are respectively coupled to two input terminals of the second AND gate AND2, and an output terminal of the second AND gate AND2 is configured to control on and off of the fourth switch S4 shown in FIG. 8. When the first decoder D1 decodes B[7:4] to obtain 0001 and the second decoder decodes A[7:6] to obtain 10, the fourth switch S4 is turned on, to conduct the transmit port TX to the second antenna port ANT2. Other decoding results of A[7:6] and B[7:4] cause the fourth switch S4 to be turned off.

A third output terminal of the second decoder D2 (where 11 is obtained through decoding A[7:6]) is coupled to two input terminals of the third AND gate AND3, and an output terminal of the third AND gate AND3 is configured to control on and off of the seventh switch S7 shown in FIG. 8. When the second decoder decodes A[7:6] to obtain 11, the seventh switch S7 is turned on, to conduct the transmit port TX to the SRS output port SRSOUT. Other decoding results of A[7:6] cause the seventh switch S7 to be turned off.

A third output terminal of the third decoder D3 (where 01 is obtained through decoding A[5:4]) is configured to control on and off of the fifth switch S5 shown in FIG. 8. When the third decoder D3 decodes A[5:4] to obtain 01, the fifth switch S5 is turned on, to conduct the second receive port RX2 to the second antenna port ANT2. Other decoding results of A[5:4] cause the fifth switch S5 to be turned off.

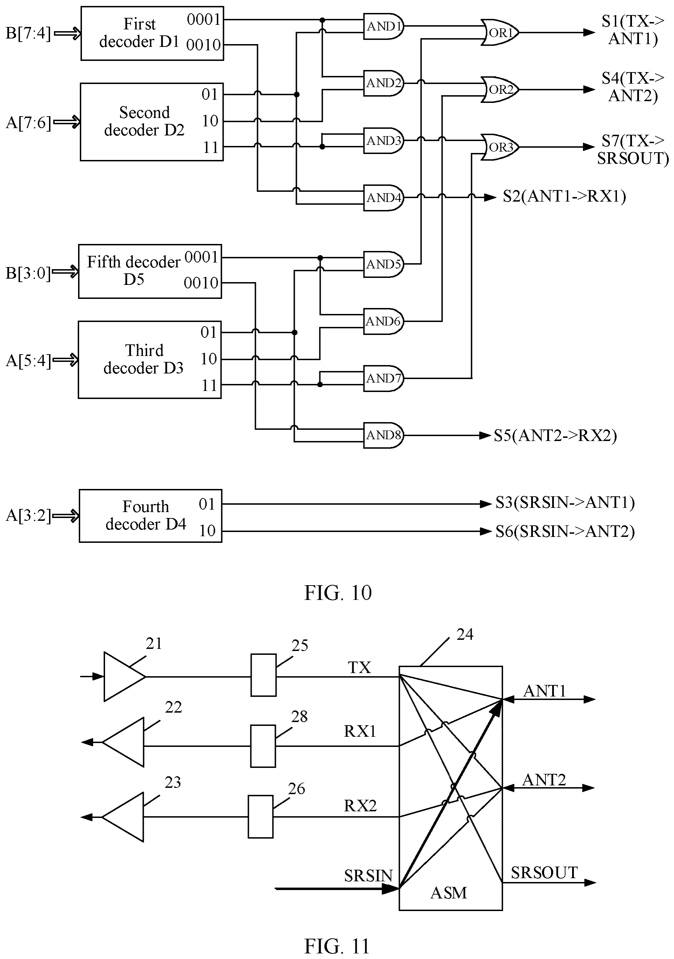

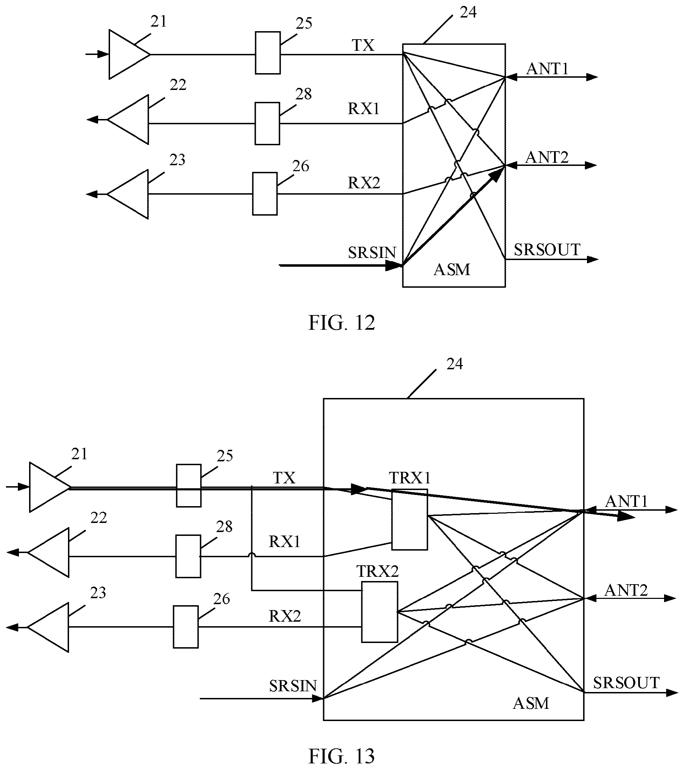

A first output terminal of the fourth decoder D4 (where 01 is obtained through decoding A[3:2]) is configured to control on and off of the third switch S3 shown in FIG. 8, and a second output terminal of the fourth decoder D4 (where 10 is obtained through decoding A[3:2]) is configured to control on and off of the sixth switch S6 shown in FIG. 8. As shown in FIG. 11, when the fourth decoder D4 decodes A[3:2] to obtain 01, the third switch S3 is turned on, to conduct the SRS input port SRSIN to the first antenna port ANT1, and the ASM 24 transmits a radio frequency signal from another radio frequency module through the first antenna port ANT1. As shown in FIG. 12, when the fourth decoder D4 decodes A[3:2] to obtain 10, the sixth switch S6 is turned on, to conduct the SRS input port SRSIN to the second antenna port ANT2, and the ASM 24 transmits the radio frequency signal from the another radio frequency module through the second antenna port ANT2. Other decoding results of A[3:2] cause the third switch S3 and the sixth switch S6 to be turned off.

Optionally, the control parameters shown in Table 5 are used as an example. As shown in FIG. 10, based on the control circuit 84 shown in FIG. 9, the control circuit 84 further includes a fifth decoder D5, a fifth AND gate AND5, a sixth AND gate AND6, a seventh AND gate AND7, an eighth AND gate AND8, a first OR gate OR1, a second OR gate OR2, and a third OR gate OR3. Input conditions of two input terminals of an OR gate are equivalent, provided that any one of the conditions is satisfied.

An input terminal of the fifth decoder D5 is configured to input B[3:0] (the bit [3:0] of the register B, namely, the first parameter of the second virtual common node TRX2), and the input terminal of the third decoder D3 is configured to input A[5:4] (the bit [5:4] of the register A, namely, the second parameter of the second virtual common node TRX2).

A first output terminal of the fifth decoder D5 (where 0001 is obtained through decoding B[3:0]) and a first output terminal of the third decoder D3 (where 01 is obtained through decoding A[5:4]) are respectively coupled to two input terminals of the fifth AND gate AND5, an output terminal of the fifth AND gate AND5 and the output terminal of the first AND gate AND1 are respectively coupled to two input terminals of the first OR gate OR1, and an output terminal of the first OR gate OR1 is configured to control on and off of the first switch S1 shown in FIG. 8. When the first decoder D1 decodes B[7:4] to obtain 0001 and the second decoder decodes A[7:6] to obtain 01, or when the fifth decoder D5 decodes B[3:0] to obtain 0001, and the third decoder D3 decodes A[5:4] to obtain 01, the first switch S1 is turned on, to conduct the transmit port TX to the first antenna port ANT1. Other decoding results of A[7:6], B[7:4], A[5:4], and B[3:0] cause the first switch S1 to be turned off.

A second output terminal of the fifth decoder D5 (where 0010 is obtained through decoding B[3:0]) and the first output terminal of the third decoder D3 (where 01 is obtained through decoding A[5:4]) are respectively coupled to two input terminals of the eighth AND gate AND8, and an output terminal of the eighth AND gate AND8 is configured to control on and off of the fifth switch S5 shown in FIG. 8. When the fifth decoder D5 decodes B[3:0] to obtain 0010 and the third decoder D3 decodes A[5:4] to obtain 01, the fifth switch S5 is turned on, to conduct the second antenna port ANT2 to the second receive port RX2. Other decoding results of A[5:4] and B[3:0] cause the fifth switch S5 to be turned off.

The first output terminal of the fifth decoder D5 (where 0001 is obtained through decoding B[3:0]) and a second output terminal of the third decoder D3 (where 10 is obtained through decoding A[5:4]) are respectively coupled to two input terminals of the sixth AND gate AND6, an output terminal of the sixth AND gate AND6 and the output terminal of the second AND gate AND2 are respectively coupled to two input terminals of the second OR gate OR2, and an output terminal of the second OR gate OR2 is configured to control on and off of the fourth switch S4 shown in FIG. 8. When the first decoder D1 decodes B[7:4] to obtain 0001 and the second decoder decodes A[7:6] to obtain 10, or when the fifth decoder D5 decodes B[3:0] to obtain 0001 and the third decoder decodes A[5:4] to obtain 10, the fourth switch S4 is turned on, to conduct the transmit port TX to the second antenna port ANT2. Other decoding results of A[7:6], B[7:4], A[5:4], and B[3:0] cause the fourth switch S4 to be turned off.

A third output terminal of the third decoder D3 (where 11 is obtained through decoding A[5:4]) is coupled to two input terminals of the seventh AND gate AND7, an output terminal of the seventh AND gate AND7 and the output terminal of the third AND gate AND3 are respectively coupled to two input terminals of the third OR gate OR3, and an output terminal of the third OR gate OR3 is configured to control on and off of the seventh switch S7 shown in FIG. 8. When the second decoder decodes A[7:6] to obtain 11, or when the third decoder D3 decodes A[5:4] to obtain 11, the seventh switch S7 is turned on, to conduct the transmit port TX to the SRS output port SRSOUT. Other decoding results of A[7:6] and A[5:4] cause the seventh switch S7 to be turned off.

For other content about FIG. 10, refer to the foregoing descriptions about FIG. 9. Details are not described herein again.

An example in which the first antenna port ANT1 is used as the primary transmit and receive port is used. Table 6 shows how to configure the control parameters in the register, so that a control logic conflict is generated.

**Table 6**

| Scenario | First parameter of the first virtual common node TRX1 | Second parameter of the first virtual common node TRX1 | First parameter of the second virtual common node TRX2 | Second parameter of the second virtual common node TRX2 |
|---|---|---|---|---|
| Scenario 1: The first antenna port ANT1 transmits the first SRS signal SRS 1 | B[7:4]=0001 (conduct the transmit port TX to the first virtual common node TRX1) | A[7:6]=01 (conduct the first virtual common node TRX1 to the first antenna port ANT1) | | |
| Scenario 2: The second antenna port ANT2 transmits the second SRS signal SRS2 | B[7:4]=0001 (conduct the transmit port TX to the first virtual common node TRX1) | A[7:6]=10 (conduct the first virtual common node TRX1 to the second antenna port ANT2) | | |
| Scenario 3: The SRS output port SRSOUT outputs the third SRS signal SRS3 | B[7:4]=0001 (conduct the transmit port TX to the first virtual common node TRX1) | A[7:6]=11 (conduct the first virtual common node TRX1 to the SRS output port SRSOUT) | | |
| Scenario 4: The first receive port RX1 receives the radio frequency signal of the first antenna port ANT1 | B[7:4]=0010 (conduct the first receive port RX1 to the first virtual common node TRX1) | A[7:6]=01 (conduct the first virtual common node TRX1 to the first antenna port ANT1) | | |
| Scenario 5: The second receive port RX2 receives the radio frequency signal from the second antenna port ANT2 | | | B[3:0]=0010 (conduct the second receive port RX2 to the second virtual common node TRX2) | A[5:4]=10 (conduct the second virtual common node TRX2 to the second antenna port ANT2) |
| Scenario 6: The first receive port RX1 receives the radio frequency signal of the first antenna port ANT1, and the second receive port RX2 receives the radio frequency signal of the second antenna port ANT2 | B[7:4]=0010 (conduct the first receive port RX1 to the first virtual common node TRX1) | A[7:6]=01 (conduct the first virtual common node TRX1 to the first antenna port ANT1) | B[3:0]=0010 (conduct the second receive port RX2 to the second virtual common node TRX2) | A[5:4]=10 (conduct the second virtual common node TRX2 to the second antenna port ANT2) |

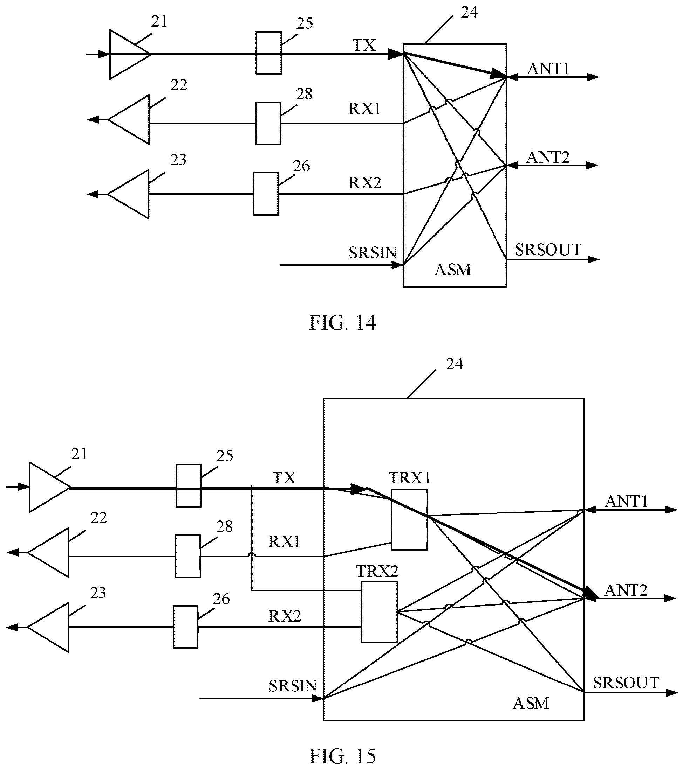

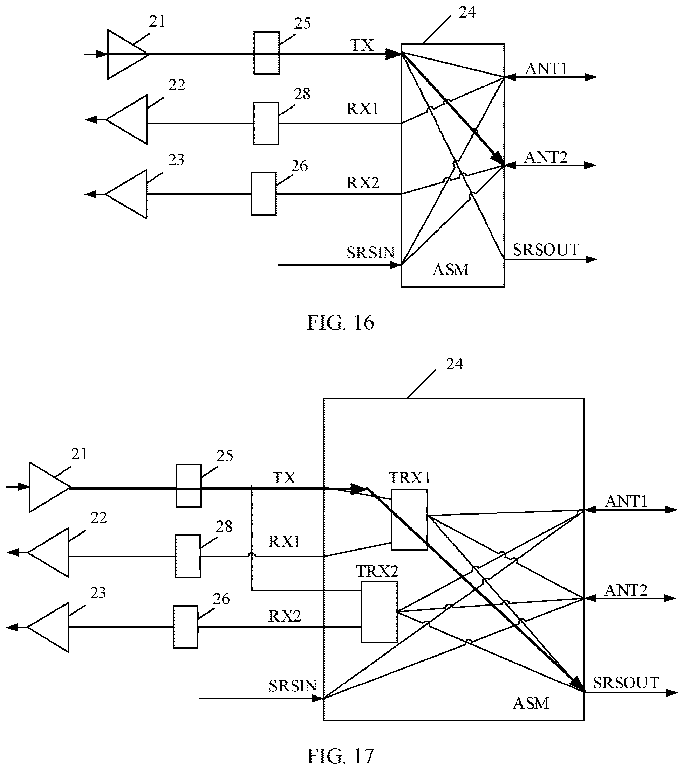

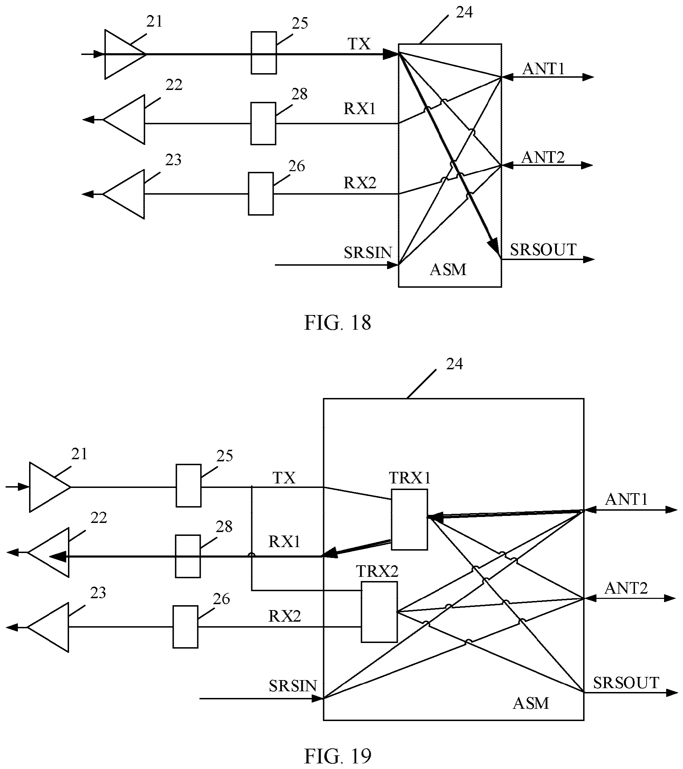

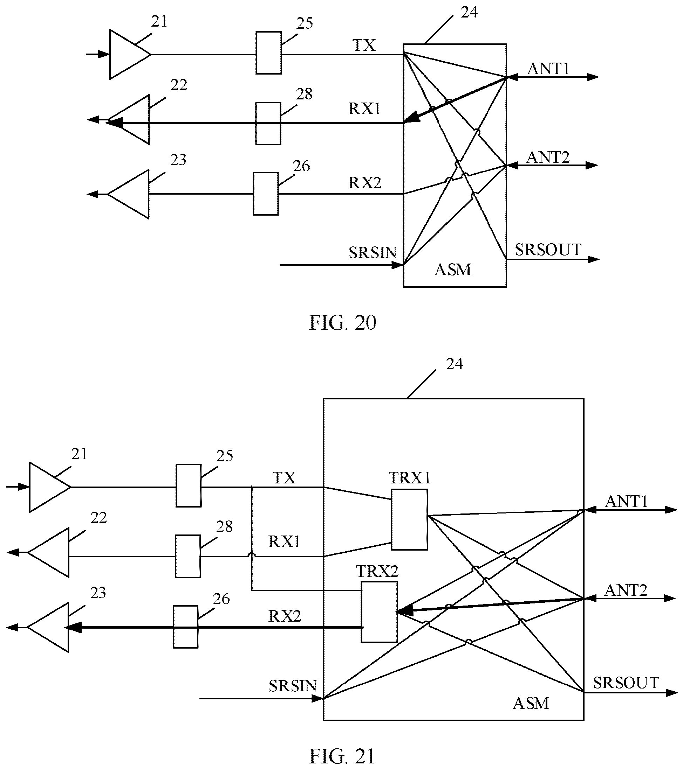

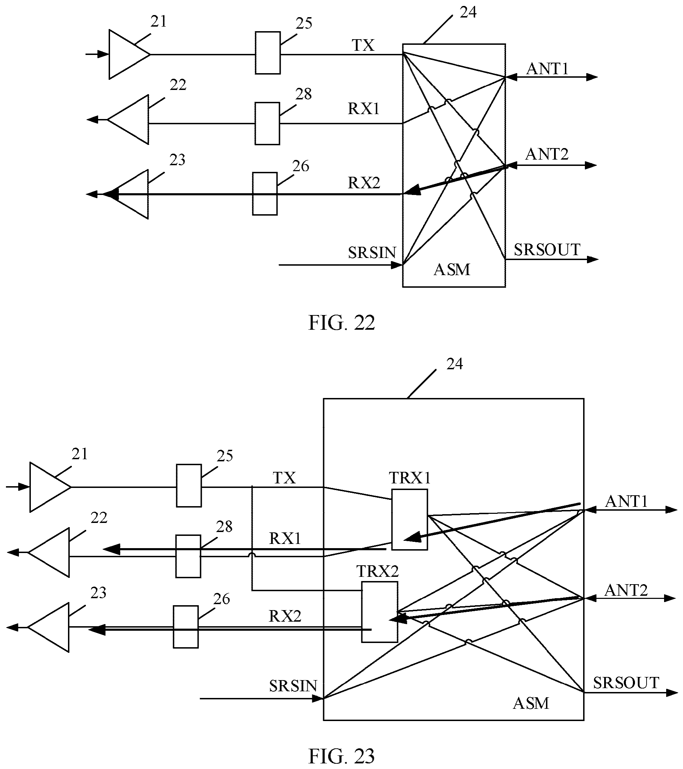

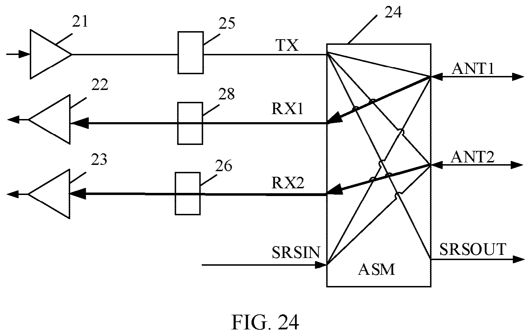

With reference to Table 6, FIG. 13 to FIG. 24 show equivalent paths and actual paths in the scenarios. FIG. 13 shows an equivalent path of the virtual common node of the scenario 1, and FIG. 14 shows an actual path of the scenario 1. FIG. 15 shows an equivalent path of the virtual common node of the scenario 2, and FIG. 16 shows an actual path of the scenario 2. FIG. 17 shows an equivalent path of the virtual common node of the scenario 3, and FIG. 18 shows an actual path of the scenario 3. FIG. 19 shows an equivalent path of the virtual common node of the scenario 4, and FIG. 20 shows an actual path of the scenario 4. FIG. 21 shows an equivalent path of the virtual common node of the scenario 5, and FIG. 22 shows an actual path of the scenario 5. FIG. 23 shows an equivalent path of the virtual common node of the scenario 6, and FIG. 24 shows an actual path of the scenario 6. For meanings of the scenarios, refer to content in Table 6.

It should be noted that, although FIG. 13 to FIG. 20 and the scenario 1 to the scenario 4 are described by using two virtual common nodes as an example, FIG. 13 to FIG. 20 and the scenario 1 to the scenario 4 are also applied to a case in which there is one virtual common node.

According to the antenna switch module, the radio frequency front end, and the communication apparatus provided in embodiments of this application, a virtual common node is established in the ASM, where the virtual common node is an intermediate node for conduction between the first group of ports and the second group of ports. A first parameter and a second parameter of the virtual common node are configured in the register in the ASM, where the first parameter indicates which port in the first group of ports the virtual common node is conducted to, and the first parameter is equivalent to controlling a first single-pole multi-throw switch between the first group of ports and the virtual common node; and the second parameter indicates which port in the second group of ports the virtual common node is conducted to, and the second parameter is equivalent to controlling a second single-pole multi-throw switch between the second group of ports and the virtual common node. The control circuit implements the AND operation performed after the first parameter and the second parameter are decoded, which is equivalent to that the first single-pole multi-throw switch and the second single-pole multi-throw switch are connected in series through the virtual common node and the virtual common node is used as a unique common node of the two groups of ports obtained through virtualization. The result of the AND operation is for controlling the switch circuit to conduct the port in the first group of ports to the port in the second group of ports based on the first parameter and the second parameter, which is equivalent to conducting the port in the first group of ports to the port in the second group of ports through the virtual common node. The control logic of the two groups of ports of the ASM is independently decoupled, so that the conflict generated in conduction between the two groups of ports of the ASM is avoided. In addition, because no physical switch is added, and control logic of switches in the ASM is constrained, an insertion loss is not increased.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

Those skilled in the art are able to clearly understand that, for easy and concise description, the specific working processes of the system, apparatus, and module described previously may refer to the corresponding processes in the method embodiment, and are not described herein.

In the several embodiments provided in this application, it should be understood that the disclosed system, device, and method may be implemented in other manners. For example, the described device embodiment is merely an example. For example, division into the modules is merely logical function division and may be other division during actual implementation. For example, a plurality of modules or components may be combined or integrated into another device, or some features may be ignored or not performed. In addition, the displayed or discussed mutual couplings or direct couplings or communication connections may be implemented by using some interfaces. The indirect couplings or communication connections between the systems or modules may be implemented in an electronic form, a mechanical form, or another form.

The modules described as separate parts may or may not be physically separate, and parts displayed as modules may or may not be physical modules, may be located in one device, or may be distributed on a plurality of devices. Some or all of the modules may be selected according to actual needs to achieve the objectives of the solutions of the embodiments.

In addition, functional modules in embodiments of this application may be integrated into one device, or each of the modules may exist alone physically, or two or more modules may be integrated into one device.

All or some of the foregoing embodiments may be implemented by software, hardware, firmware, or any combination thereof. When a software program is used to implement embodiments, embodiments may be implemented entirely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna switch module, comprising a first group of ports, a second group of ports, a control circuit, a switch circuit, and a register, wherein the first group of ports is coupled to the second group of ports through the switch circuit; the first group of ports is configured to couple to a plurality of channels, and the second group of ports is configured to couple to a plurality of antennas;
the register is configured to store a first parameter and a second parameter of a first virtual common node, wherein the first parameter of the first virtual common node indicates which port in the first group of ports the first virtual common node is conducted to, and the second parameter of the first virtual common node indicates which port in the second group of ports the first virtual common node is conducted to; and
the control circuit is configured to control the switch circuit to conduct the port in the first group of ports to the port in the second group of ports based on the first parameter and the second parameter of the first virtual common node.

2. The antenna switch module according to claim 1, wherein the plurality of channels comprise a transmit channel and a first receive channel, and the plurality of antennas comprise a first antenna and a second antenna; the first group of ports comprises a transmit port and a first receive port, the transmit port is configured to couple to the transmit channel, and the first receive port is configured to couple to the first receive channel; the second group of ports comprises a first antenna port, a second antenna port, and a sounding reference signal SRS output port, the first antenna port is configured to couple to the first antenna, the second antenna port is configured to couple to the second antenna, and the SRS output port is configured to couple to another radio frequency module; the switch circuit comprises a first switch, a second switch, a fourth switch, and a seventh switch;
the transmit port is coupled to the first antenna port through the first switch, the transmit port is coupled to the second antenna port through the fourth switch, and the transmit port is coupled to the SRS output port through the seventh switch; and the first receive port is coupled to the first antenna port through the second switch.

3. The antenna switch module according to claim 2, wherein the control circuit is specifically configured to control the switch circuit to conduct the port in the first group of ports to the port in the second group of ports based on a result of performing AND after the first parameter and the second parameter of the first virtual common node are decoded.

4. The antenna switch module according to claim 3, wherein the control circuit comprises a first decoder, a second decoder, a first AND gate, a second AND gate, a third AND gate, and a fourth AND gate; an input terminal of the first decoder is configured to input the first parameter of the first virtual common node; an input terminal of the second decoder is configured to input the second parameter of the first virtual common node;
a first output terminal of the first decoder and a first output terminal of the second decoder are respectively coupled to two input terminals of the first AND gate, and an output terminal of the first AND gate is configured to control on and off of the first switch;
a second output terminal of the first decoder and the first output terminal of the second decoder are respectively coupled to two input terminals of the fourth AND gate, and an output terminal of the fourth AND gate is configured to control on and off of the second switch;
the first output terminal of the first decoder and a second output terminal of the second decoder are respectively coupled to two input terminals of the second AND gate, and an output terminal of the second AND gate is configured to control on and off of the fourth switch; and
a third output terminal of the second decoder is coupled to two input terminals of the third AND gate, and an output terminal of the third AND gate is configured to control on and off of the seventh switch.

5. The antenna switch module according to claim 4, wherein the plurality of channels further comprise a second receive channel, the first group of ports further comprises a second receive port, the second receive port is configured to couple to the second receive channel, the switch circuit further comprises a fifth switch, and the second receive port is coupled to the second antenna port through the fifth switch.

6. The antenna switch module according to claim 5, wherein the control circuit further comprises a third decoder, an input terminal of the third decoder is configured to input a third parameter, and an output terminal of the third decoder is configured to control on and off of the fifth switch.

7. The antenna switch module according to claim 1, wherein
the register is further configured to store a first parameter and a second parameter of a second virtual common node, wherein the first parameter of the second virtual common node indicates which port in the first group of ports the second virtual common node is conducted to, and the second parameter of the second virtual common node indicates which port in the second group of ports the second virtual common node is conducted to; and
the control circuit is configured to control the switch circuit to conduct the port in the first group of ports to the port in the second group of ports based on a result of performing AND after the first parameter and the second parameter of the first virtual common node are decoded or based on a result of performing AND after the first parameter and the second parameter of the second virtual common node are decoded.

8. The antenna switch module according to claim 7, wherein the plurality of channels comprise a transmit channel, a first receive channel, and a second receive channel, and the plurality of antennas comprise a first antenna and a second antenna; the first group of ports comprises a transmit port, a first receive port, and a second receive port, the transmit port is configured to couple to the transmit channel, the first receive port is configured to couple to the first receive channel, and the second receive port is configured to couple to the second receive channel; the second group of ports comprises a first antenna port, a second antenna port, and an SRS output port, the first antenna port is configured to couple to the first antenna, the second antenna port is configured to couple to the second antenna, and the SRS output port is configured to couple to another radio frequency module; the switch circuit comprises a first switch, a second switch, a fourth switch, a fifth switch, and a seventh switch;
the transmit port is coupled to the first antenna port through the first switch, the transmit port is coupled to the second antenna port through the fourth switch, and the transmit port is coupled to the SRS output port through the seventh switch; the first receive port is coupled to the first antenna port through the second switch; and the second receive port is coupled to the second antenna port through the fifth switch.

9. The antenna switch module according to claim 8, wherein the control circuit comprises a first decoder, a second decoder, a first AND gate, a second AND gate, a third AND gate, a fourth AND gate, a third decoder, a fifth decoder, a fifth AND gate, a sixth AND gate, a seventh AND gate, an eighth AND gate, a first OR gate, a second OR gate, and a third OR gate; an input terminal of the first decoder is configured to input the first parameter of the first virtual common node; an input terminal of the second decoder is configured to input the second parameter of the first virtual common node; an input terminal of the fifth decoder is configured to input the first parameter of the second virtual common node; an input terminal of the third decoder is configured to input the second parameter of the second virtual common node;
a first output terminal of the first decoder and a first output terminal of the second decoder are respectively coupled to two input terminals of the first AND gate, and an output terminal of the first AND gate is configured to control on and off of the first switch;
a second output terminal of the first decoder and the first output terminal of the second decoder are respectively coupled to two input terminals of the fourth AND gate, and an output terminal of the fourth AND gate is configured to control on and off of the second switch;
the first output terminal of the first decoder and a second output terminal of the second decoder are respectively coupled to two input terminals of the second AND gate, and an output terminal of the second AND gate is configured to control on and off of the fourth switch;
a third output terminal of the second decoder is coupled to two input terminals of the third AND gate, and an output terminal of the third AND gate is configured to control on and off of the seventh switch;
a first output terminal of the fifth decoder and a first output terminal of the third decoder are respectively coupled to two input terminals of the fifth AND gate, an output terminal of the fifth AND gate and the output terminal of the first AND gate are respectively coupled to two input terminals of the first OR gate, and an output terminal of the first OR gate is configured to control on and off of the first switch;
a second output terminal of the fifth decoder and the first output terminal of the third decoder are respectively coupled to two input terminals of the eighth AND gate, and an output terminal of the eighth AND gate is configured to control on and off of the fifth switch;
the first output terminal of the fifth decoder and a second output terminal of the third decoder are respectively coupled to two input terminals of the sixth AND gate, an output terminal of the sixth AND gate and the output terminal of the second AND gate are respectively coupled to two input terminals of the second OR gate, and an output terminal of the second OR gate is configured to control on and off of the fourth switch; and
a third output terminal of the third decoder is coupled to two input terminals of the seventh AND gate, an output terminal of the seventh AND gate and the output terminal of the third AND gate are respectively coupled to two input terminals of the third OR gate, and an output terminal of the third OR gate is configured to control on and off of the seventh switch.

10. The antenna switch module according to any one of claims 2 to 9, wherein the first group of ports further comprises an SRS input port, the SRS input port is configured to couple to another radio frequency module, and the switch circuit further comprises a third switch and a sixth switch; and
the SRS input port is coupled to the first antenna port through the third switch, and the SRS input port is coupled to the second antenna port through the sixth switch.

11. The antenna switch module according to claim 10, wherein the control circuit further comprises a fourth decoder, an input terminal of the fourth decoder is configured to input a fourth parameter, a first output terminal of the fourth decoder is configured to control on and off of the third switch, and a second output terminal of the fourth decoder is configured to control on and off of the sixth switch.

12. The antenna switch module according to any one of claims 1 to 11, wherein a first parameter and a second parameter of a same virtual common node are stored in one or two registers.

13. A radio frequency front end, comprising a power amplifier, a first linear amplifier, a second linear amplifier, a first filter, a second filter, a third filter, and the antenna switch module according to any one of claims 1 to 12, wherein the power amplifier is coupled to the transmit port of the antenna switch module through the first filter, the first linear amplifier is coupled to the first receive port of the antenna switch module through the second filter, and the second linear amplifier is coupled to the second receive port of the antenna switch module through the third filter.

14. A communication apparatus, comprising the radio frequency front end according to claim 13 and a plurality of antennas, wherein the radio frequency front end is coupled to the plurality of antennas.
